# EUROPÄISCHE PATENTSCHRIFT

(11) **EP 2 017 096 B1**
(45) Veröffentlichungstag und Bekanntmachung des Hinweises auf die Patenterteilung: **18.11.2009**
(21) Anmeldenummer: 08011232.9
(22) Anmeldetag: 20.06.2008
(51) Int. Cl.: B60C 27/18, B60C 27/06

(54) **Gleitschutzvorrichtung für Fahrzeugreifen, mit einem Tragegurt aus Bahnmaterial sowie Nachrüstsatz hierfür**
Slip protection device for vehicle tyres, with a carrier belt made of sheet material and upgrade set for same
Dispositif antidérapant pour pneus doté d'une sangle de support en matériau en bande ainsi que complément d'équipement correspondant

(30) Priorität: 18.07.2007 DE 202007010095 U
(43) Veröffentlichungstag der Anmeldung: 21.01.2009
(73) Patentinhaber: RUD Ketten Rieger & Dietz GmbH u. Co. KG, 73432 Aalen-Unterkochen (DE)
(72) Erfinder: Rieger, Hansjörg, 73431 Aalen (DE); Kaiser, Helmut, 73457 Essingen (DE)
(74) Vertreter: Grünecker, Kinkeldey, Stockmair & Schwanhäusser Anwaltssozietät

(56) Entgegenhaltungen:
- WO-A-00/59745
- US-A1- 2005 224 152

## Beschreibung

Die Erfindung betrifft eine Gleitschutzvorrichtung für Fahrzeugreifen, mit einem Trägergurt aus einem Bahnmaterial, wobei der Trägergurt eine kreisringförmige, radial nach außen weisende Lauffläche, die sich in axialer Richtung entlang einer Mantelfläche eines Kreiszylinders erstreckt, und sich an die beiden axialen Enden der Lauffläche anschließende, sich in radialer Richtung von der Lauffläche nach innen erstreckende Seitenwangen aufweist. Die Erfindung betrifft zudem einen Nachrüstsatz für eine Gleitschutzvorrichtung für Fahrzeugräder, die einen Textilgurt mit einer kreisringförmigen, radial nach aussenden weisenden Lauffläche, die sich in axialer Richtung entlang einer Mantelfläche eines Kreiszylinders erstreckt, und sich in axialer Richtung an die Lauffläche anschließende, sich von der Lauffläche radial nach innen erstreckende Seitenwangen umfasst.

Gleitschutzvorrichtungen der eingangs genannten Art sind beispielsweise aus der US 2,682,907, der WO 2000/059745 A1 und der EP 1 621 370 A2 bekannt. Bei diesen Gleitschutzvorrichtungen ist die Lauffläche aus einem Gewebematerial gefertigt, das besonders auf Eis gute Traktionseigenschaften aufweist. Der Vorteil solcher textiler Gleitschutzvorrichtungen liegt in ihrem geringen Gewicht und ihrer geringen Größe, in die sie bei Nichtgebrauch gefaltet werden können. Nachteilig bei diesen Gleitschutzketten ist allerdings das Traktionsverhalten auf Schnee und Matsch sowie Schlamm.

Der Erfindung liegt daher die Aufgabe zugrunde, die bekannten Gleitschutzvorrichtungen aus textilem Bahnmaterial so zu verbessern, dass bei nach wie vor geringem Gewicht und, bei Nichtgebrauch, geringer Größe die Traktionseigenschaften verbessert werden.

Diese Aufgabe wird erfindungsgemäß für die eingangs genannte Gleitschutzvorrichtung auf einfache Weise dadurch gelöst, dass vom Trägergurt an der Lauffläche anlegbar gehaltene Traktionsmittel in Form von Kettenelementen vorgesehen sind.

Diese Lösung hat den Vorteil, dass insbesondere die Traktion auf Schnee und Matsch sowie in Schlamm verbessert wird. Gleichzeitig bleiben die guten Lenk- und Traktionseigenschaften auf Eis aufgrund der nach wie vor vorhandenen Lauffläche aus Bahnmaterial erhaften. Durch die Verwendung von Kettenelementen bleibt die Flexibilität des Bahnmaterials nutzbar, so dass die Gleitschutzvorrichtung nach wie vor auf eine kleine Größe zusammengelegt werden kann, wenn sie nicht gebraucht wird. Als Kettenelemente können neben Rundstahlkettengliedem auch Kettenlaschen oder stegförmige, sich im Betrieb aufstellende Elemente oder beliebige Kombinationen hiervon verwendet werden. Die Kettenelemente sind - wie bei Ketten üblich - gelenkig miteinander verbunden.

Die erfindungsgemäße Lösung kann durch weitere, jeweils für sich unabhängig vorteilhafte und beliebig miteinander kombinierbare Ausgestaltungen weiter verbessert werden.

In einer weiteren vorteilhaften Ausgestaltung können die Traktionsmittel an den Seitenwangen befestigt sein. Bei dieser Ausgestaltung kommen die Befestigungspunkte, an denen die Traktionsmittel mit dem Trägergurt verbunden sind, im Betrieb nicht zwischen Reifen und Untergrund zu liegen. Dadurch werden sowohl die Befestigungspunkte als auch das Reifenmaterial geschont. Im Betrieb, bei abrollendem Reifen, nimmt die Lauffläche die Zentrifugalkräfte als Zugkräfte auf.Von besonderem Vorteil ist es daher, wenn die Traktionsmittel an oder möglichst nahe an der Lauffläche befestigt sind, so dass die von den Traktionsmitteln beim Abrollen erzeugten Zentrifugalkräfte ebenfalls möglichst direkt in die Lauffläche eingeleitet werden. Beispielsweise können die Traktionsmittel in einem Übergangsbereich der Seitenwangen zur Lauffläche, vorzugsweise also in dem an die Lauffläche angrenzenden Abschnitt der Seitenwangen befestigt sein. Die Seitenwangen bleiben bei dieser Ausgestaltung nahezu kraftfrei, so dass sie an ihrem radial innenliegenden Rand beispielsweise zum Zwecke einer leichteren Montage elastisch weitbar ausgestaltet sein können. Eine Versteifung der Seitenwangen ist somit nicht notwendig. Je näher die Befestigungspunkte zur Lauffläche hin angeordnet sind, umso weniger Kräfte müssen die Seitenwangen aufnehmen.

Dieser Vorteil wird natürlich auch erreicht, wenn die Traktionsmittel direkt an der Lauffläche angebracht sind. Allerdings werden dann die Stellen, an denen die Traktionsmittel befestigt sind, durch das Abrollen stärker belastet.

Die Traktionsmittel können sich in einer weiteren Ausgestaltung zumindest abschnittsweise in axialer Richtung von dem einen axialen zu dem anderen axialen Rand der Lauffläche erstrecken, so dass die von den Traktionsmitteln erzeugten Zentrifugalkräfte an beiden Seiten der Lauffläche eingeleitet werden.

Die Befestigungsmittel liegen bevorzugt in axialer Richtung auf gleicher Höhe und/oder sind symmetrisch an der Lauffläche und/oder den beiden Seitenwangen angeordnet, damit Zentrifugalkräfte an gleichen Umfangspositionen in die Lauffläche eingeleitet und keine Scher- bzw. Torsionskräfte im Trägergurt erzeugt werden.

Von Vorteil ist ferner, wenn die Traktionsmittel wiederholt lösbar, bevorzugt einzeln lösbar, am Trägergurt befestigt sind, da auf diese Weise durch einen Austausch der Traktionsmittel eine optimale Anpassung der Gleitschutzvorrichtung an die jeweiligen Straßenverhältnisse möglich ist. Außerdem können die Traktionsmittel bei Verschleiß gewechselt werden.

Damit die zur Befestigung der Traktionsmittel am Trägergurt dienenden Befestigungsmittel im Betrieb nicht auf dem Untergrund aufschlagen und beschädigt werden, können die Befestigungsmittel vorzugsweise innerhalb der Außenkontur der Lauffläche angeordnet sein, so dass sie nicht mit dem Untergrund, auf dem der Reifen abrollt, in Berührung kommen.

Eine hohe Belastbarkeit des Trägergurtes kann erreicht werden, wenn dieser aus einem textilen Material im Wesentlichen nahtfrei gefertigt ist. Dabei kann das textile Material auch lediglich eine obere Schicht des flexiblen Trägergurts bilden. Ein textiles Material hat besonders auf Eis hohe Reibungswerte.

Es ist ferner von Vorteil, wenn die Traktionsmittel wenigstens abschnittsweise in Form von axial verlaufenden, in Umfangsrichtung voneinander beabstandeten Kettensträngen ausgebildet sind, weil auf diese Weise die durch die Kettenstränge erhaltene Traktion am größten ist. Gleichzeitig kann in den Zwischenräumen zwischen den Kettensträngen die Lauffläche den Untergrund berühren, so dass auch bei Eis gute Traktionswerte erzielt werden. Die Kettenstränge können insbesondere parallel zueinander verlaufen.

Um ein Durchrutschen der Reifen auf weichem Untergrund weitgehend zu vermeiden, ist es ferner von Vorteil, wenn der Abstand der Kettenstränge voneinander in Umfangsrichtung höchstens etwa um 10 % größer ist als die in Umfangsrichtung gemessene Länge der Auflagefläche des Fahrzeugreifens. Vorzugsweise ist der Abstand jedoch geringer als die Länge der Auflagefläche, damit stets ein Traktionsmittel Kontakt mit dem Untergrund hat.

Als Material für die Kettenelemente kommen tieftemperaturfeste Werkstoffe, insbesondere Stahliegierungen, aber auch Kunststoffe in Frage. Kettenelemente unterschiedlicher Form und Zusammensetzung können in einem Kettenstrang kombiniert werden.

Die eingangs genannte Aufgabe wird schließlich auch gelöst durch einen Nachrüstsatz für eine bekannte Gleitschutzvorrichtung aus einem textilen Gurt mit einer kreisringförmigen, radial nach außen weisenden Lauffläche, die sich in axialer Richtung entlang einer Mantelfläche eines Kreiszylinders erstreckt, und sich in axialer Richtung an die Lauffläche anschließende, sich von der Lauffläche radial nach innen erstreckende Seitenwangen aufweist. Der Nachrüstsatz weist Traktionselemente mit Kettengliedern und mit den Traktionselementen verbindbare, von Hand an der Lauffläche und/oder den Seitenwangen befestigbare Befestigungsmittel auf. Die Befestigungsmittel sind vorzugsweise ohne Spezialwerkzeug an den Seitenwangen befestigbar.

Auf diese Weise können die bekannten textilen Gleitschutzvorrichtungen leicht nachgerüstet werden. Sie können wahlweise in ihrer ursprünglichen Ausgestaltung oder zusammen mit den Traktionsmitteln verwendet und damit an den Untergrund angepasst werden, wenn gemäß einer weiteren vorteilhaften Ausgestaltung des Nachrüstsatzes die Traktionselemente wiederholt lösbar von den Befestigungsmitteln ausgestaltet sind.

Im Folgenden ist die Erfindung mit Bezug auf die Zeichnungen anhand mehrerer Ausführungsformen, deren unterschiedliche Merkmale gemäß den obigen Bemerkungen beliebig miteinander kombinierbar sind, näher ertäutert.

Es zeigen:
- Fig. 1: eine schematische Perspektivdarstellung einer erfindungsgemäßen Gleitschutzvorrichtung sowie einen erfindungsgemäßen Nachrüstsatz;
- Fig. 2a bis 2d: verschiedene Ausführungsformen von Befestigungsmitteln der erfin- dungsgemäßen Gleitschutzvorrichtung in schematischen Darstellun- gen;
- Fig. 3a bis 3d: verschiedene Ausführungsformen von Traktionsmitteln in schemati- schen Darstellungen;
- Fig. 4a, 4b: zwei unterschiedliche Ausführungsformen von Traktionsmitteln in schematischer Darstellung.

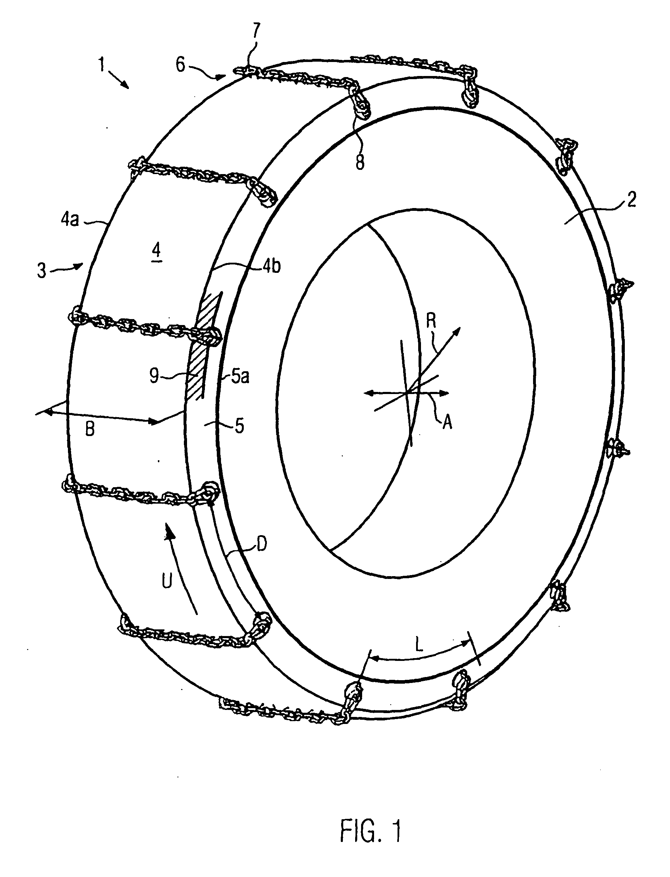

Zunächst wird der Aufbau einer erfindungsgemäßen Gleitschutzvorrichtung sowie eines erfindungsgemäßen Nachrüstsatzes anhand der Fig. 1 erläutert.

In Fig. 1 ist die Gleitschutzvorrichtung 1 auf einem Fahrzeugreifen 2 montiert dargestellt. Die Gleitschutzvorrichtung 1 weist einen flexiblen Laufgurt 3 aus einem Bahnmaterial, vorzugsweise aus einem textilen Material, wie einem Gewebe oder einem Vlies, auf, der im montierten Zustand auf einer Lauffläche des Reifens aufliegt und diese seitlich umgreift. Hierzu ist der Trägergurt 3 mit einer Lauffläche 4 versehen, die sich in axialer Richtung A in etwa über die Reifenbreite erstreckt und als Mantelfläche eines Kreiszylinders ausgestaltet ist. Die Lauffläche 4 weist dabei in radialer Richtung R nach außen, so dass sie auf einem in Fig. 1 nicht dargestellten Untergrund, auf dem der Fahrzeugreifen 2 abrollt, zu liegen kommt.

An den beiden in axialer Richtung A gelegenen Enden 4a, 4b der Lauffläche 4 sind jeweils sich von der Lauffläche 4 in radialer Richtung nach innen erstreckende, kreisringförmige Seitenwangen 5 vorgesehen, von denen in Fig. 1 nur die eine Seitenwange zu sehen ist. Die Seitenwangen 5 können insbesondere nahtfrei mit der Lauffläche 4 verbunden sein. An dem radial inneren Ende der Seitenwange 5 kann eine umlaufende Verstärkung 5a in Form eines Wulstes oder eines eingenähten Zugmittels, wie einem Seil, angebracht sein. Die Seitenwangen 5 können auch in radialer Richtung vorzugsweise elastisch weitbar ausgestaltet sein, beispielsweise aus einem elastisch dehnbaren Material gefertigt sein.

An der Lauffläche 4 außen anliegend sind Traktionselemente 6 am Trägergurt 3 befestigt, die Kettenelemente 7 aufweisen.

Die Traktionsmittel 6 sind über Befestigungsmittel 8 vorzugsweise wiederholt lösbar am Trägergurt 3 an der Lauffläche 4 oder an den Seitenwangen 5 möglichst nahe an der Lauffläche 4, beispielsweise in einem schraffiert angedeuteten Übergangsbereich 9, in dem die Seitenwange 5 an die Lauffläche 4 angrenzt, angebracht.

Wie in der in Fig. 1 dargestellten Ausführungsform zu erkennen ist, verlaufen die Traktionsmittel 6 in axialer Richtung parallel zueinander von Seitenwange zu Seitenwange. Die Traktionsmittel 6 sind ferner in Umfangsrichtung U voneinander beabstandet, wobei der Abstand D in Umfangsrichtung U zwischen benachbarten Traktionsmitteln 6 in etwa der Länge L der Auflagefläche des Fahrzeugreifens 2 in Umfangsrichtung U entspricht, vorzugsweise jedoch kleiner als die Länge L ist.

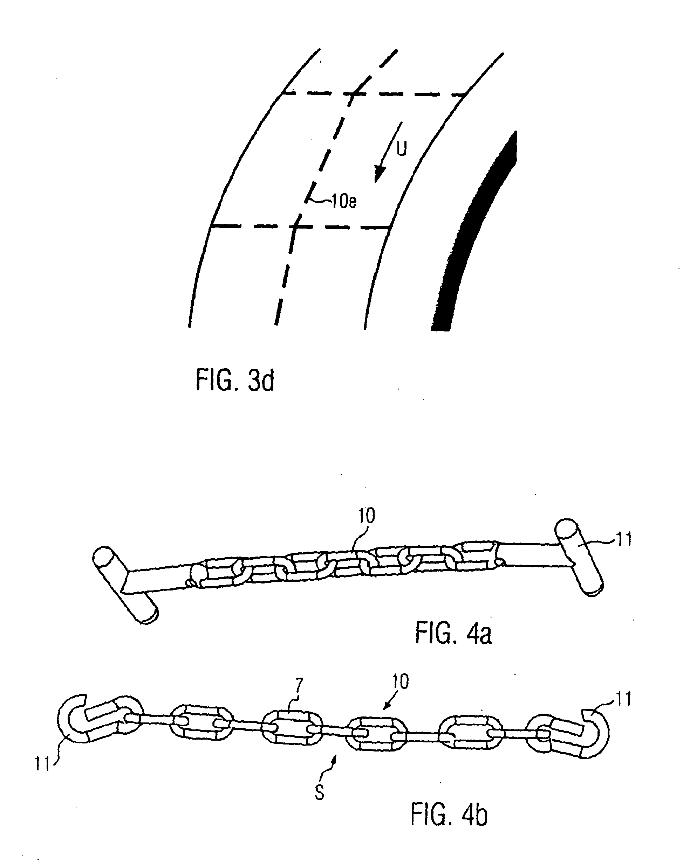

Die Traktionsmittel 6 können insbesondere Kettenstränge aus einer Rundstahlkette sein, wie sie in Fig. 4b im Detail dargestellt sind. Die Länge S des Kettenstranges 10 ist vorzugsweise wenigstens etwa so groß wie die Breite B des Fahrzeugreifens 2. An den Enden des Kettenstrangs sind wiederholt lösbare Haltemittel 11 in Form von Karabinem in den Kettenstrang 10 eingehängt oder anderweitig vorzugsweise gelenkig befestigt.

Anstelle von oder zusätzlich zu Rundstahlketten können auch Traktionselemente verwendet werden, die Kettenelemente unterschiedlicher Form, beispielsweise mit Laschen, in Form von Stegen oder Ringen, auch in beliebiger Kombination umfassen. Kantige Kettenelemente, wie Laschen oder Stege, führen insbesondere auf Eis zu guter Traktion.

In Fig. 4a ist eine Abwandlung gezeigt, bei der die Haltemittel 11 bei ansonsten unverändertem Kettenstrang 10 in Form von T-förmigen Knebeln ausgebildet sind, die ebenfalls in den Kettenstrang 10 eingehängt sein können. Bevorzugt sind das Haltemittel 11 und der Kettenstrang 10 gelenkig miteinander verbunden, so dass das Traktionsmittel 6 der Querschnittskontur des Reifens über die Lauffläche und die Seitenwangen und auch der Walkbewegung des Reifens 2 beim Abrollen auf dem Untergrund folgen kann. Das Haltemittel 11 ist in der in Fig. 4a und 4b gezeigten Ausgestaltung wiederholt lösbar vom Befestigungsmittel 8 ausgebildet.

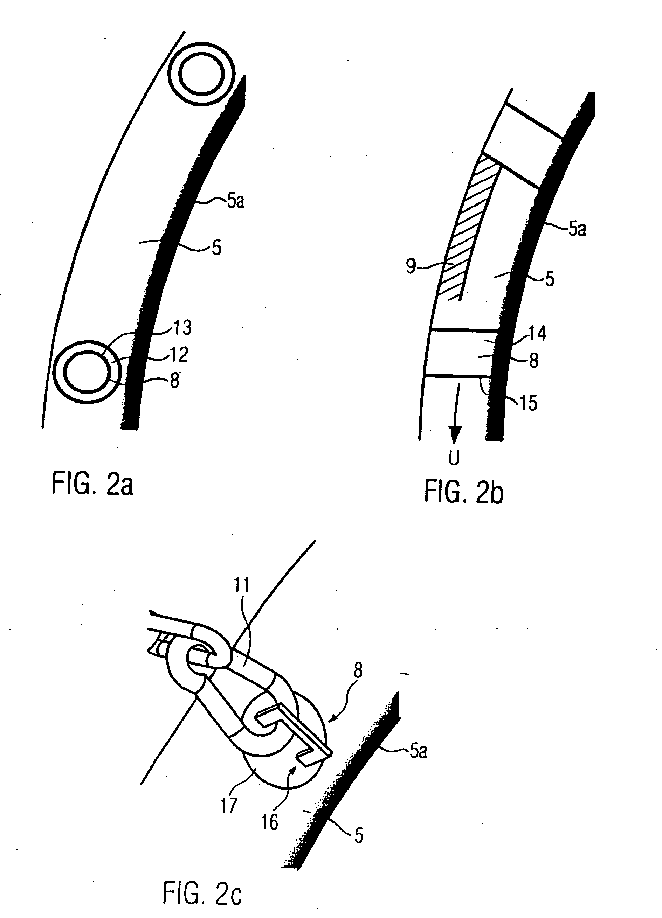

Für die Ausgestaltung des Befestigungsmittels 8 sind ebenfalls mehrere Ausführungsformen möglich, wie im Folgenden mit Bezug auf die Fig. 2a bis 2d beispielhaft ausgeführt ist. In den Fig. 2a bis 2d ist schematisch ein Abschnitt einer Seitenwange 5 der Gleitschutzvorrichtung 1 dargestellt.

In der Fig. 2a sind die Befestigungsmittel 8 in Form von Ösen 12 ausgestaltet, die durch die Seitenwange 5 reichende Öffnungen ausbilden und in die die Haltemittel 6 beispielsweise die Knebel oder Karabiner der Fig. 4a und 4b eingehängt werden können. Die Ösen 12 sind mit einem verstärkten Rand insbesondere aus einem Metall umgeben.

Anstelle von Ösen können auch Laschen 14 als Befestigungselemente 8 vorgesehen sein. Die Laschen 8 erlauben ebenfalls die Verwendung von beispielsweise Karabinern als Haltemittel 11.

Die Laschen 14 können durch zwei vorzugsweise radiusparallele Schlitze 15 in der Seitenwange 5 gebildet und an ihren Rändern verstärkt sein. Alternativ können die Laschen 8 auch durch eine sich von dem Übergangsbereich 9 bis vorzugsweise dem Rand 5a der Seitenwange 5 erstreckende Materialbrücke gebildet sein, die sich über die Seitenwange 5 erstreckt. Eine derartige Materialbrücke kann in das Gewebematerial des Trägergurtes 3 eingewebt sein.

Das Befestigungsmittel 8 kann ferner in Form eines Auges 16 ausgebildet sein, dessen Befestigungskörper 17 sich durch die Seitenwange 5 hindurch erstreckt, beispielsweise in Form eines Nietes, wie in Fig. 2c gezeigt ist. In das Auge 16 kann das Haltemittel 11 lösbar eingesetzt, beispielsweise eingeklinkt, werden.

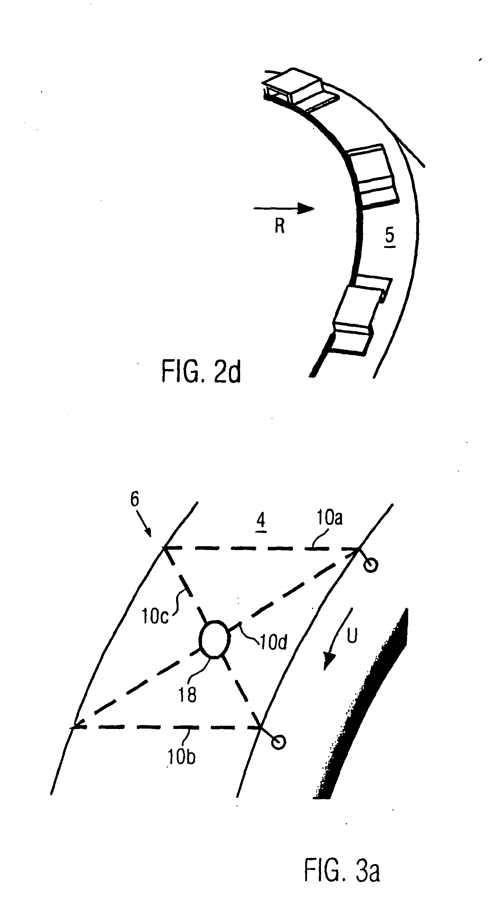

Anstelle einer sich in Umfangsrichtung U öffnenden Lasche 14, wie sie in Fig. 2b gezeigt ist, kann auch eine sich in radialer Richtung R öffnende Lasche 14 vorgesehen sein, wie sie in Fig. 2d gezeigt ist. Die Lasche 14 kann insbesondere aus einem Metallwerkstoff gebildet sein und an ihren Rändern an das Material der Seitenwange 5 genietet oder mit diesem verklebt, verschweißt oder vernäht sein.

Ist die Gleitschutzvorrichtung 1 als Nachrüstsatz ausgebildet, so umfasst dieser wenigstens die Traktionselemente 6 und die Befestigungsmittel 8. Die Befestigungsmittel 8 sind dabei so ausgestaltet, dass sie von Hand vorzugsweise ohne Spezialwerkzeug an den Seitenwangen 5 angebracht werden können. Dies ist beispielsweise bei den Befestigungsmitteln 8 der Fig. 2a, 2c und 2d der Fall, da Geräte zum Setzen von Ösen und Nieten in textilen Materialien mit haushaltsüblichen Werkzeugen, wie einem Hammer und einer festen Unterlage, bedient werden können. Das Werkzeug kann auch Teil des Nachrüstsatzes sein.

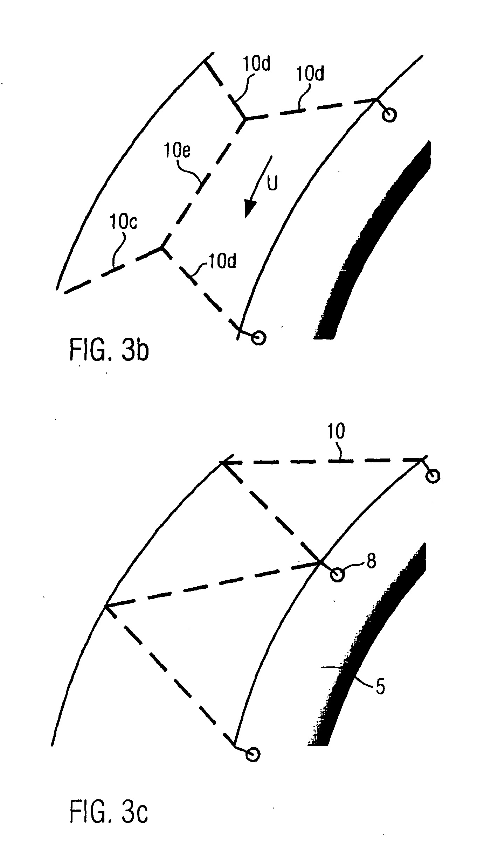

In den Fig. 3a bis 3d sind Abwandlungen der Traktionsmittel 6 schematisch dargestellt.

Gemäß der Ausführungsform der Fig. 3a kann zwischen zwei parallelen Kettensträngen 10a, 10b wenigstens ein bezüglich der Umfangsrichtung U schräg verlaufender Kettenabschnitt 10c, 10d vorgesehen sein. Insbesondere kann, wie in Fig. 3a dargestellt, ein Spurkreuz von sich in der Mitte der Lauffläche 4 überkreuzenden Kettensträngen 10c und 10d gebildet sein. Im Bereich der Überkreuzung ist ein Ring 18 angeordnet, an dem die diagonal über die Lauffläche verlaufenden Kettenstränge eingehängt sind.

Anstelle des Ringes 18 können die schräg verlaufenden Kettenstrangabschnitte 10c, 10d auch durch wenigstens einen in Umfangsrichtung U, vorzugsweise parallel zu dieser, verlaufenden Kettenstrangabschnitt 10e verbunden sein. Bei dieser Ausgestaltung sorgt der in Umfangsrichtung U verlaufende Kettenstrang 10e für einen guten Geradeauslauf.

Ein relativ unkomplizierter Aufbau mit einer geringen Anzahl von Teilen ergibt sich bei der in der Fig. 3c dargestellten Ausgestaltung, bei der als Traktionsmittel 6 ein einzelner Kettenstrang 10 zickzackförmig um den gesamten Umfang des Fahrzeugreifens 2 abwechselnd durch die Befestigungsmittel 8 jeweils einer Seitenwange 5 gehalten ist.

Schließlich kann die in Fig. 1 dargestellte Anordnung der Traktionsmittel 6 durch wenigstens einen Kettenstrang 10e ergänzt werden, der in Umfangsrichtung U um die Lauffläche 4 herum verläuft, die achsparallelen Kettenstränge verbindet und für einen guten Geradeauslauf sorgt.

Bei allen Ausführungsformen der Fig.3a bis 3d ist der Abstand zwischen den Traktionsmitteln so groß, dass die Lauffläche 4 bei hartem, im Wesentlichen unnachgiebigem Grund aufgrund der Flexibilität des Fahrzeugreifens 2 den Untergrund berührt und zusätzlich die Traktion erhöht.

## Patentansprüche

1. Gleitschutzvorrichtung (1) für Fahrzeugreifen (2) mit einem flexiblen Trägergurt (3) aus einem Bahnmaterial, wobei der Trägergurt eine kreisringförmige, radial nach außen weisende Lauffläche (4), die sich in axialer Richtung (A) entlang einer Mantelfläche eines Kreiszylinders erstreckt, und sich an die beiden axialen Enden (4a, 4b) der Lauffläche anschließende, sich in radialer Richtung (R) von der Lauffläche nach innen erstreckende Seitenwangen (5) aufweist, **gekennzeichnet durch** vom Trägergurt (3) auf der Lauffläche (4) anlegbar gehaltene Traktionsmittel (6) in Form von Kettenelementen (7).

2. Gleitschutzvorrichtung (1) nach Anspruch 1, **dadurch gekennzeichnet, dass** die Traktionsmittel (6) an den Seitenwangen (5) und/oder der Lauffläche (4) befestigt sind.

3. Gleitschutzvorrichtung (1) nach Anspruch 2, **dadurch gekennzeichnet, dass** die Traktionsmittel (6) in einem Übergangsbereich (9) der Seitenwangen zur Lauffläche (4) befestigt sind.

4. Gleitschutzvorrichtung (1) nach einem der Ansprüche 1 bis 3, **dadurch gekennzeichnet, dass** sich die Traktionsmittel (6) zumindest abschnittsweise in axialer Richtung (A) von der einen zur anderen Seitenwange (5) erstrecken.

5. Gleitschutzvorrichtung (1) nach einem der Ansprüche 1 bis 3, **dadurch gekennzeichnet, dass** die Traktionsmittel (6) wiederholt lösbar an dem Trägergurt (3) befestigt sind.

6. Gleitschutzvorrichtung (1) nach einem der Ansprüche 1 bis 5, **dadurch gekennzeichnet, dass** die Traktionsmittel (6) an am Trägergurt (3) angebrachten Befestigungsmitteln (8) befestigt sind und die Befestigungsmittel (8) innerhalb der Außenkontur der Lauffläche (4) angeordnet sind.

7. Gleitschutzvorrichtung (1) nach einem der Ansprüche 1 bis 6, **dadurch gekennzeichnet, dass** die Seitenwangen 5 und die Lauffläche 4 im Wesentlichen nahtfrei miteinander verbunden sind.

8. Gleitschutzvorrichtung (1) nach einem der Ansprüche 1 bis 7, **dadurch gekennzeichnet, dass** die Traktionsmittel 6 axial verlaufende, in Umfangsrichtung voneinander beabstandete Kettenstränge aufweisen, die parallel zueinander verlaufen.

9. Gleitschutzvorrichtung (1) nach Anspruch 8, **dadurch gekennzeichnet, dass** der Abstand (D) der axial verlaufenden Kettenstränge (10) in Umfangsrichtung in etwa einer Länge (L) der Auflagefläche des Fahrzeugreifens (2) auf dem Untergrund entspricht.

10. Nachrüstsatz für eine Gleitschutzvorrichtung (1) für Fahrzeugreifen (2), die einen textilen Gurt (3) mit einer kreisringförmigen, radial nach außen weisenden Lauffläche (4), die sich in axialer Richtung entlang einer Mantelfläche eines Kreiszylinders erstreckt, und sich in axialer Richtung an die Laufflächen anschließende, sich von der Lauffläche radial nach innen erstreckende Seitenwangen (5) aufweist, wobei der Nachrüstsatz Traktionselemente (6) mit Kettengliedern (7) und mit den Traktionselementen verbindbare, von Hand an den Seitenwangen (5) befestigbare Befestigungsmittel (8) aufweist.

11. Nachrüstsatz nach Anspruch 10, **dadurch gekennzeichnet, dass** die Traktionselemente (6) wiederholt lösbar von den Befestigungsmitteln (8) ausgestaltet sind.

12. Nachrüstsatz nach Anspruch 10 oder 11, **dadurch gekennzeichnet, dass** die Befestigungsmittel in Form von handsetzbarer Ösen oder Nieten ausgebildet sind.

## Claims

1. Anti-skid device (1) for vehicle tyres (2) with a flexible carrier belt (3) made of a web material, the carrier belt having an annular tread (4) which faces radially outwards, extends in the axial direction (A) along a generated surface of a circular cylinder and comprises lateral flanges (5), which are attached to the two axial ends (4a, 4b) of the tread and extend inwards from the tread in the radial direction (R), **characterised by** traction means (6) in the form of chain elements (7) which are held by the carrier belt (3) so as to lie on the tread (4).

2. Anti-skid device (1) according to claim 1, **characterised in that** the traction means (6) are fastened to the lateral flanges (5) and/or to the tread (4).

3. Anti-skid device (1) according to claim 2, **characterised in that** the traction means (6) are fastened in a transition region (9) of the lateral flanges into the tread (4).

4. Anti-skid device (1) according to any one of claims 1 to 3, **characterised in that** the traction means (6) extend, at least in portions, in the axial direction (A) from one lateral flange (5) to the other.

5. Anti-skid device (1) according to any one of claims 1 to 3, **characterised in that** the traction means (6) are fastened to the carrier belt (3) in such a way that they can be removed repeatedly.

6. Anti-skid device (1) according to any one of claims 1 to 5, **characterised in that** the traction means (6) are fastened to fastening means (8) attached to the carrier belt (3) and the fastening means (8) are arranged within the outer contour of the tread (4).

7. Anti-skid device according to any one of claims 1 to 6, **characterised in that** the lateral flanges (5) and the tread (4) are interconnected substantially seamlessly.

8. Anti-skid device (1) according to any one of claims 1 to 7, **characterised in that** the traction means (6) comprise chain strands which extend axially in parallel and are spaced apart circumferentially.

9. Anti-skid device (1) according to claim 8, **characterised in that** the distance (D) between the axially extending chain strands (10) in the circumferential direction approximately corresponds to the length (L) of the surface of the vehicle tyre (2) which is in contact with the ground below.

10. Upgrade kit for an anti-skid device (1) for vehicle tyres (2), which device comprises a textile belt (3) with an annular tread (4) which faces radially outwards, extends in the axial direction (A) along a generated surface of a circular cylinder and comprises lateral flanges (5), which are attached to the treads in the axial direction and extend radially inwards from the tread, wherein the upgrade kit comprises traction elements (6) with chain links (7) and fastening means (8) which can be connected to the traction elements and can be manually fastened to the lateral flanges (5).

11. Upgrade kit according to claim 10, **characterised in that** the traction elements (6) are formed in such a way that they can be removed repeatedly from the fastening means (8).

12. Upgrade kit according to either claim 10 or 11, **characterised in that** the fastening means are constructed in the form of eyes or rivets which can be applied manually.

## Revendications

1. Dispositif antidérapant (1) pour des pneus (2) de véhicule automobile, comportant une sangle de support flexible (3) réalisée dans un matériau en bande, ladite sangle de support étant munie d'une surface de roulement (4) circulaire, qui est orientée radialement vers l'extérieur et qui s'étend dans la direction axiale (A) le long d'une surface latérale d'un cylindre circulaire, et de joues latérales (5), se rattachant aux deux extrémités axiales (4a, 4b) de la surface de roulement et s'étendant dans la direction radiale (R) depuis la surface de roulement vers l'intérieur, **caractérisé par** des moyens de traction (6), en forme d'éléments de chaîne (7) et tenus par la sangle de support (3) de manière à pouvoir être appuyés sur la surface de roulement (4).

2. Dispositif antidérapant (1) selon la revendication 1, **caractérisé en ce que** les moyens de traction (6) sont fixés contre les joues latérales (5) et/ou la surface de roulement (4).

3. Dispositif antidérapant (1) selon la revendication 2, **caractérisé en ce que** les moyens de traction (6) sont fixés dans une zone de transition (9) des joues latérales vers la surface de roulement (4).

4. Dispositif antidérapant (1) selon l'une quelconque des revendications 1 à 3, **caractérisé en ce que** les moyens de traction (6) s'étendent au moins en partie dans la direction axiale (A) depuis l'une des joues latérales (5) vers l'autre.

5. Dispositif antidérapant (1) selon l'une quelconque des revendications 1 à 3, **caractérisé en ce que** les moyens de traction (6) sont fixés de manière amovible répétitive sur la sangle de support (3).

6. Dispositif antidérapant (1) selon l'une quelconque des revendications 1 à 5, **caractérisé en ce que** les moyens de traction (6) sont fixés à des moyens de fixation (8) attachés à la sangle de support (3) et lesdits moyens de fixation (8) sont disposés à l'intérieur du contour extérieur de la surface de roulement (4).

7. Dispositif antidérapant (1) selon l'une quelconque des revendications 1 à 6, **caractérisé en ce que** les joues latérales (5) et la surface de roulement (4) sont assemblées entre elles sensiblement sans joint.

8. Dispositif antidérapant (1) selon l'une quelconque des revendications 1 à 7, **caractérisé en ce que** les moyens de traction (6) comportent des tronçons de chaîne orientés axialement, lesquels sont écartés les uns des autres dans la direction circonférentielle et sont disposés parallèlement entre eux.

9. Dispositif antidérapant (1) selon la revendication 8, **caractérisé en ce que** la distance (D) entre les tronçons de chaîne (10) orientés axialement correspond dans la direction circonférentielle à peu près à une longueur (L) de la surface d'appui du pneu (2) sur le sol.

10. Complément d'équipement pour un dispositif antidérapant (1) pour des pneus (2) de véhicule automobile, qui comporte une sangle textile (3) avec une surface de roulement (4) circulaire, qui est orientée radialement vers l'extérieur et qui s'étend dans la direction axiale le long d'une surface latérale d'un cylindre circulaire, et avec des joues latérales (5), se rattachant aux surfaces de roulement dans la direction axiale et s'étendant depuis la surface de roulement radialement vers l'intérieur, ledit complément d'équipement comportant des éléments de traction (6) avec des maillons de chaîne (7) et avec des moyens de fixation (8) aptes à être reliés aux éléments de traction et pouvant être fixés manuellement sur les joues latérales (5).

11. Complément d'équipement selon la revendication 10, **caractérisé en ce que** les éléments de traction (6) sont équipés des moyens de fixation (8) de manière amovible répétitive.

12. Complément d'équipement selon la revendication 10 ou 11, **caractérisé en ce que** les moyens de fixation sont réalisés sous la forme d'oeillets ou rivets à fixer manuellement.
